# EUROPÄISCHE PATENTSCHRIFT

(11) **EP 2 190 800 B1**
(45) Veröffentlichungstag und Bekanntmachung des Hinweises auf die Patenterteilung: **25.01.2012**
(21) Anmeldenummer: 08804179.3
(22) Anmeldetag: 15.09.2008
(51) Int. Cl.: C04B 40/00, C08K 13/02, C04B 28/00

(54) **MISCHUNG ENTHALTEND QUARTÄRE AMMONIUMVERBINDUNG UND DEREN VERWENDUNG**
MIXTURE CONTAINING QUATERNARY AMMONIUM COMPOUND AND ITS USE
MÉLANGE CONTENANT UN COMPOSÉ D'AMMONIUM QUATERNAIRE ET SON UTILISATION

(30) Priorität: 18.09.2007 EP 07116675
(43) Veröffentlichungstag der Anmeldung: 02.06.2010
(73) Patentinhaber: Akzo Nobel N.V., 6824 BM Arnhem (NL)
(72) Erfinder: KELLER, Adrian, CH-5102 Rupperswil (CH)
(74) Vertreter: Alferink, Petrus J.T.
(86) Internationale Anmeldenummer: PCT/EP2008/062218
(87) Internationale Veröffentlichungsnummer: WO 2009/037218

(56) Entgegenhaltungen:
- EP-A- 0 894 821
- WO-A-01/18081
- GB-A- 2 294 459
- DATABASE WPI Week 200375 Thomson Scientific, London, GB; AN 2003-794001 XP002476556 -& JP 2003 245604 A (NIPPON KENKYUSHO KK) 2. September 2003 (2003-09-02)

## Beschreibung

Die vorliegende Erfindung betrifft die Verwendung von quartären organischen Ammoniumverbindungen zur Reduktion von Ausblühungen in Baustoffmassen. Des Weiteren betrifft die vorliegende Erfindung Mischungen enthaltend quartäre organische Ammoniumverbindungen, Verfahren zur Herstellung der Mischungen und deren vorteilhafte Verwendung.

Ausblühungen sind insbesondere bei zementären Baustoffmassen wie Beton, Putze und Mörteln bekannt. Der Fachmann versteht darunter weissliche Ablagerungen an der Oberfläche, die vor allem durch herausgelöstes Calciumhydroxid entstehen, welches durch Kohlendioxid aus der Luft zu Calciumcarbonat weiterreagiert. Dabei können auch noch weitere Salzablagerungen enthalten sein. Obwohl solche Ausblühungen in der Regel keinen nennenswerten Einfluss auf die physikalischen Werte des Substrates haben, werden sie doch vor allem bei eingefärbten oder grauen Oberflächen als sehr störend empfunden.

Um dieses Problem zu lösen, werden in der WO 2001/72658 A1, WO 2005/097699 A1 wie auch in der WO 2006/094528 A1 und der WO 2006/094809 A1 verschiedene Vorschläge gemacht, die Mörtelzusammensetzung durch spezifische Auswahl der mineralischen Bindemittelkomponenten entsprechend zu formulieren. Dadurch können zwar die Ausblühungen reduziert werden, aber dem Formulierer wird die Möglichkeit sehr stark eingeschränkt, gerade durch Verändern dieser Komponenten das Eigenschaftsprofil, wie beispielsweise Abbindeverhalten, Topfzeit, offene Zeit und/ oder Schwundverhalten des zu formulierenden Mörtels wunschgemäss einzustellen.

In einem anderen Ansatz werden Additive genannt, deren Zugabe zu hydraulisch abbindenden Baustoffmassen Ausblühungen verhindern oder reduzieren sollen. So erwähnt beispielsweise die GB 1,088,485 A, dass eine wässrige Dispersion einer Mischung von Tallölharz und hochsiedenden Fraktionen von Tallöl, zum Teil auch mit Asphalt vermischt, entweder dem Beton zugemischt oder nachträglich auf die Oberfläche aufgebracht werden kann. Das Verfahren zur Herstellung solcher Dispersionen ist sehr kompliziert und somit teuer, wobei auch die dunkle bis schwarze Farbe der Mischung deren Einsatzbereich stark einschränkt. In der DE 33 21 027 A1 wird ein Verfahren beschrieben, wobei unter anderem auch eine Verminderung der Effloreszenz (Ausblühungen) und eine Verringerung der Wasseraufnahme eintreten soll. Dabei werden Terpenpolymere, insbesondere von flüssigen niedermolekularen Terpenen, allein oder in Mischung mit anderen Terpenkohlenwasserstoffen, die den zementhaltigen Baustoffen in einer Menge von 0.1 - 10 Gew.-% zugesetzt werden, verwendet. Die Zugabe der Terpen-basierten Verbindungen erfolgt in emulgierter Form oder durch Aufsprühen von flüssigen oder gelösten Terpenen, was den Einsatz unter anderem in Trockenmörteln verunmöglicht. Des weiteren beschreibt die EP 1 767 506 A1 ein in Wasser redispergierbares Pulver zur Reduktion von Ausblühungen in hydraulisch abgebundenen Baustoffmassen, bestehend aus mindestens einer organischen Komponente und mindestens einem wasserlöslichen organischen polymeren Schutzkolloid, wobei die organische Komponente mindestens eine Verbindung mit einer cyclischen Gruppe enthält, die ganz oder teilweise gesättigt ist, einen Schmelzpunkt von etwa -20 bis 250 °C sowie ein Molekulargewicht von etwa 100 bis 10'000 besitzt, und mit dem wasserlöslichen organischen polymeren Schutzkolloid in Wasser eine stabile Dispersion bildet.

Die GB 2,343,448 A beschreibt Mauerbeton mit verbesserter Frost-Tau Beständigkeit, wobei zu diesem auch Additive zur Kontrolle von Ausblühungen gegeben werden können. Als solche Additive werden Calciumstearat, Fettsäuren und deren Salze, Polyvinylalkohol, Wasser-basierte Latices, Silane, Siloxane sowie deren Mischungen genannt. Um dem Mauerbeton eine genügende Standfestigkeit zu geben, werden geringe Mengen eines Betains zugegeben.

Die US 2005/0106336 A1 und die WO 2005/014256 A1 beschreiben Komposit-Materialien, welche zur Produktion von Zement-basierten Platten geeignet sind, wobei ein Material mit antimikrobiellen Eigenschaften zugegeben wird. Als antimikrobielle Verbindungen können organische und anorganische Agentien eingesetzt werden. Eine bevorzugte Klasse sind quartäre Ammoniumverbindungen. Ausblühungen werden nicht erwähnt.

In der Offenlegungsschrift DE 26 36 271 wird ein Verfahren zur Herstellung eines leichten Mörtels mit einem überwiegenden Volumenanteil an expandiertem Perlit beschrieben. Dazu werden neben Perlit auch Zement und in etwa gleicher Menge Calciumhydroxid oder Calciumoxid sowie ein Tensid zugegeben. Das einzusetzende Tensid ist bevorzugt anionischer Natur, kann aber auch kationischer oder nichtionischer Natur sein. Von Ausblühungen ist nicht die Rede.

Aufgrund der stark verschiedenen Einsatzgebieten von Mörteln und Betonen besitzen diese auch eine sehr unterschiedliche Zusammensetzung. Hinzu kommt, dass beispielsweise ein anderer Zement, sei es von einem anderen Produktionsort oder eine andere Qualität, ein ganz anderes Ausblühverhalten zeigen kann. Auch die klimatischen Bedingungen spielen eine wichtige Rolle, ob eine applizierte Baustoffmasse zu Ausblühungen neigt oder nicht. Entsprechend der Vielzahl an verschiedenen Zusammensetzungen von Beton und Mörtel hat es sich gezeigt, dass es von grossem Vorteil ist, wenn der Formulierer aus verschiedenen Materialien zur Reduktion von Ausblühungen auswählen kann, um für die jeweilige spezifische Rezeptur das am Besten geeignete Produkt auszuwählen.

Es stellte sich somit die Aufgabe, ein Additiv bereitzustellen, welches das Ausblühen von Baustoffmassen, insbesondere hydraulisch abbindende Baustoffmassen, wie beispielsweise zementäre Mörtel und Betone, unterbindet oder zumindest sehr stark reduziert. Zudem soll das Additiv insbesondere für die Formulierung von Trockenmörteln in Pulverform vorliegen können, um die bekannten Nachteile von flüssigen Rohstoffen wie beispielsweise mangelnde Frost-Tau-Beständigkeit oder limitierte Lagerbeständigkeit ohne Zusatz von toxischen Bioziden, zu umgehen sowie um eine einfache Dosierung bei Trockenmörtelformulierungen zu ermöglichen. Zudem ist es essentiell, dass sich dieses Additiv in die mit Wasser angerührte oder anzurührende Mörtelmatrix einfach einbringen lässt, ohne dass spezielle Mischvorgänge beachtet werden müssen. Das Additiv soll in der Mörtelmischung sehr gut benetzbar, redispergierbar oder lösbar sein und sich in der Matrix einfach und homogen verteilen lassen. Es ist auch wichtig, dass mit dem Additiv keine nachteiligen oder ganz andere Mörteleigenschaften erhalten werden, d. h. es soll möglich sein, das Additiv in bestehende Mörtelformulierungen zu geben, ohne dass sich deren Eigenschaften ändern, bis auf die gewünschte starke Reduktion des Ausblüheffektes. Das Additiv soll zudem unabhängig von anderen Mörtelrohstoffen dosiert werden können, was dem Formulierer eine sehr grosse Flexibilität ermöglicht. Weiter ist es wichtig, dass sich durch das Additiv die Rohstoff- und Herstellkosten des Trockenmörtels nicht oder nur geringfügig ändern.

Die komplexe Aufgabe konnte überraschenderweise gelöst werden durch die Verwendung von quartären organischen Ammoniumverbindungen zur Reduktion von Ausblühungen bei Baustoffmassen.

Gegenstand der vorliegenden Erfindung ist zudem auch eine Mischung enthaltend mindestens eine quartäre organische Ammoniumverbindung und mindestens ein wasserlösliches organisches Polymer sowie gegebenenfalls weitere Additive.

In der Regel ist es hilfreich, wenn die quartäre organische Ammoniumverbindung nicht an organische Oberflächen, insbesondere nicht an Oberflächen von Polymerpartikeln wie Latex oder Dispersionen, adsorbiert ist und somit beispielsweise nicht schon vor und/ oder während der Herstellung solcher Polymerisate durch geeignete Verfahren wie Emulsionspolymerisation zugegeben wird, sondern sie sich in Baustoffmassen, wenn diese mit Wasser angerührt und/ oder vermischt sind, oder auf applizierten Baustoffmassen, unabhängig vom wasserlöslichen organischen Polymer bewegen kann.

In Baustoffmassen können erfindungsgemäss alle quartären organischen Ammoniumverbindung eingesetzt werden, sofern sie in der jeweiligen Baustoffmasse die Ausblühungen in geeignetem Mass reduzieren und keine oder nur unwesentliche nachteilige Effekte wie beispielsweise eine Verzögerung der Zementhydratation oder Verschlechterung der Mörtelverarbeitbarkeit zur Folge haben.

Als quartäre organische Ammoniumverbindungen, welche auch als QAV bekannt sind, werden für die erfindungsgemässe Verwendung und für die erfindungsgemässe Mischung bevorzugt lineare, verzweigte und/ oder cyclische Alkylammonium-Verbindungen, Imin-Verbindungen, N-alkylierte Heteroaromaten und/ oder amphotere Verbindungen eingesetzt.

Bevorzugte Alkylammonium-Verbindungen sind solche vom Amin-Typ, wobei eine oder gleichzeitig verschiedene quartäre organische Ammoniumverbindungen eingesetzt werden können. In der Regel ist es besonders bevorzugt, dass mindestens eine quartäre organische Ammoniumverbindung die Formel (1), (2) und/ oder (3)

(N⁺R₁R₂R₃R₄)A⁻ (1)

(N⁺R₁R₂R₃R₄)₂A²⁻ (2)

(N⁺R₁R₂R₃R₄)₃A³⁻ (3)

besitzt, wobei R₁, R₂, R₃ und R₄ organische Gruppen mit mindestens einem C-Atom darstellen und gleich oder unterschiedlich sind, und A⁻ ein einwertiges, A²⁻ ein zweiwertiges und A³⁻ ein dreiwertiges Anion bedeutet. Typische Vertreter dieser Klasse von Alkylammonium-Verbindungen sind Alkyltrimethylammoniumsalze wie beispielsweise Cetyltrimethylammoniumbromid oder -chlorid, Dialkyldimethylammoniumsalze, Benzalkoniumsalze wie beispielsweise Benzalkoniumchlorid, Esterquats, welche in der Regel auf quartären Triethanol-Methyl-Ammonium- oder quartären Diethanol-Dimethyl-Ammonium-Verbindungen basieren, ethoxylierte quartäre organische Ammoniumverbindung wie auch Organobentonite.

Bevorzugte Imin-Verbindungen sind vom Typ R₃=NR₁R₂⁺A⁻, wobei Imidazolium-Verbindungen besonders bevorzugt sind. Bevorzugte N-alkylierte Heteroaromaten sind beispielsweise Pyridinium-Verbindungen. Bevorzugte amphotere Verbindungen sind beispielsweise Betaine oder Lecithine, wobei Phospholipide wie beispielsweise Phosphatidylcholinen oder Sphingocholine besonders bevorzugt sind.

Oft ist es bevorzugt, wenn mindestens eine der organischen Gruppen R₁, R₂, R₃ und/ oder R₄ der quartären organischen Ammoniumverbindung eine gesättigte und/ oder ungesättigte C₁- bis C₄- Alkylgruppe, insbesondere eine Methyl-, Ethyl-, Propyl-, Butylgruppe, besitzt. Ganz besonders bevorzugt ist eine oder mehrere Methyl- und/ oder Ethylgruppe.

Es ist oft von Vorteil, wenn mindestens eine der organischen Gruppen R₁, R₂, R₃ und/ oder R₄ mindestens eine gesättigte und/ oder ungesättigte C₆- bis C₅₀- Alkyl- und/ oder Heteroalkylgruppe, bevorzugt eine C₆- bis C₄₀- Alkyl- und/ oder Heteroalkylgruppe, insbesondere eine C₈- bis C₃₀- Alkyl- und/ oder Heteroalkylgruppe, und ganz besonders bevorzugt eine C₈- bis C₂₄- Alkyl- und/ oder Heteroalkylgruppe, ist, die linear, verzweigt, cyclisch und/ oder aromatisch ist.

Ist ein separates Anion vorhanden, liegen die quartären Ammoniumverbindungen in der Regel als quartäre Ammoniumsalze vor. In der Regel können, insbesondere um diese quartären Ammoniumsalze zu erhalten, alle typischen Anionen eingesetzt werden. Als einwertige Anionen A⁻ eignen sich insbesondere Fluorid, Chlorid, Bromid, Iodid, Hydroxid, Methyl Sulfat, Hydrogencarbonat und/ oder Dihydrogenphosphat, als zweiwertige Anionen A²⁻ sind Sulfat, Carbonat und/ oder Hydrogenphosphat, und als dreiwertiges Anion A³⁻ ist Phosphat besonders geeignet.

Nicht limitierende Beispiele von quartären organischen Ammoniumverbindungen sind Alkyltrialkylammoniumsalze wie beispielsweise Alkyltriethylammoniumsalze und/ oder Alkyltrimethylammoniumsalze, insbesondere Dodecyltrimethylammoniumsalze, Cetyltrimethylammoniumsalze, Behenyltrimethylammoniumsalze, Caprontrimethylammoniumsalze, Capryltrimethylammoniumsalze, Caprintrimethylammoniumsalze, Lauryltrimethylammoniumsalze, Myristyltrimethylethylammoniumsalze, Cetryltrimethylammoniumsalze, Stearyltrimethylammoniumsalze, Dodecyltriethylammoniumsalze, Cetyltriethylammoniumsalze, Behenyltriethylammoniumsalze, Caprontriethylammoniumsalze, Capryltriethylammoniumsalze, Caprintriethylammoniumsalze, Lauryltriethylammoniumsalze, Myristyltriethylethylammoniumsalze, Cetryltriethylammoniumsalze, Stearyltriethylammoniumsalze sowie deren methyldiethyl, dimethylethyl und triethyl- analogen Verbindungen, Dialkyldialkylammoniumsalze wie beispielsweise Dialkyldimethylammoniumsalze und Dialkyldiethylammoniumsalze, inbesondere Didodecyldimethylammoniumsalze, Dicetyldimethylammoniumsalze, Dibehenyldimethylammoniumsalze, Dicaprondimethylammoniumsalze, Dicaprydimethylammoniumsalze, Dicaprindimethylammoniumsalze, Dilauryldimethylammoniumsalze, Dimyristyldimethylammoniumsalze, Dicetryldimethylammoniumsalze, Distearyldimethylammoniumsalze sowie deren methylethyl- und diethyl- analogen Verbindungen, wobei auch Mischformen wie beispielsweise Caprylstearylmethylethylammoniumsalze oder Laurylcaprinmethylethylammoniumsalze darunter fallen, Trialkylmethylammoniumsalze und Trialkylethylammoniumsalze wie beispielsweise Tridodecylmethylammoniumsalze, Tricetylmethylammoniumsalze, Tribehenylmethylammoniumsalze, Tricapronmethylammoniumsalze, Tricaprymethylammoniumsalze, Tricaprinmethylammoniumsalze, Trilaurylmethylammoniumsalze, Trimyristylmethylethylammoiumsalze, Tricetrylmethylammoniumsalze, Tristearylmethylammoniumsalze sowie deren methylethyl- und diethyl- analogen Verbindungen, wobei auch die jeweiligen Mischformen wie beispielsweise Caprylstearylmyristylmethylammoniumsalze oder Laurylcaprinbehenylethylammoniumsalze darunter fallen, Benzyltrialkylammoniumsalze wie beispielsweise Benzalkoniumsalze und Alkyldimethylbenzylammoniumsalze, insbesondere Dodecyldimethylbenzylammoniumsalze, Cetyldimethylbenzylammoniumsalze, Behenyldimethylbenzylammoniumsalze, Caprondimethylbenzylammoniumsalze, Caprydimethylbenzylammoniumsalze, Caprindimethylbenzylammoniumsalze, Lauryldimethylbenzylammoniumsalze, Myristyldimethylbenzylammoniumsalze, Cetryldimethylbenzylammoniumsalze, Stearyldimethylbenzylammoniumsalze, Alkyldimethylbenzylammoniumsalze wie beispielsweise Benzyldimethylmyristylammoniumsalze, Benzyldimethylcetylammoniumsalze, Benzyldimethylstearylammoniumsalze, Benzylmethylethylstearylammoniumsalze, und/ oder Alkylpyridiniumsalze wie beispielsweise Lauryl-oder Cetylpyridiniumsalze, aber auch Alkylisoquinoliniumsalze, Dialkylmorpholiniumsalze. Des Weiteren können auch Benzethoniumsalze, Imidazolium-Verbindungen und/ oder Imidazolinderivate eingesetzt werden.

Als quartäre organische Ammoniumverbindungen können auch Esterquats eingesetzt werden. Bei den häufig eingesetzten Esterquats handelt es sich um bekannte Stoffe, die sowohl mindestens eine Esterfunktion als auch mindestens eine quartäre Ammoniumgruppe als Strukturelement enthalten, insbesondere quaternierte Estersalze von Fettsäuren mit Triethanolamin, quaternierte Estersalze von Fettsäuren mit Diethanolalkylaminen und quaternierten Estersalzen von Fettsäuren mit 1,2-Dihydroxypropyldialkylaminen. Solche Produkte werden beispielsweise unter den Warenzeichen Stepantex®, Dehyquart® und Armocare® vertrieben. Die Produkte Armocare® VGH-70, ein N,N-Bis(2-Palmitoyloxyethyl) dimethylammonium- sowie Dehyquart® F-75, Dehyquart® C-4046, Dehyquart® L80 und Dehyquart® AU-35 sind Beispiele für solche Esterquats.

Zudem können auch Betain-Verbindungen verwendet werden, wobei bevorzugt synthetische und/ oder natürlich vorkommende Verbindungen mit der Atomgruppierung R₃N⁺ -CH₂-X-COO⁻ wie beispielsweise Betain (Me₃N⁺-CH₂-COO-) und Carnitin (Me₃N⁺-CH₂-CHOH-CH₂-COO⁻), wobei Me für Methyl steht, und/ oder Alkylamidopropylbetain, eingesetzt werden.

Die Alkylgruppen der quartären organischen Ammoniumverbindungen können auch mit funktionellen Gruppen substituiert sein, beispielsweise mit Hydroxyl-, Amin-, Amid-, Imin-, Carbonyl-, Carboxyl-, Silan-, Siloxan-, Ether-, Thioether-, Ester-, Nitril-, Sulfonsäure-, Epoxid-, Carbonsäureanhydrid- Carbonylgruppen und/ oder Halogenen wie F oder Cl. Nicht limitierende Beispiele sind Alkyldimethylhydroxyethylammoniumsalze und/ oder Alkylamidethyltrimethyl-ammoniumethersulfate, um nur einige Beispiele zu nennen.

Das Molekulargewicht der gesättigten und/ oder ungesättigten C₆- bis C₅₀- Alkyl- und/ oder Heteroalkylgruppe ist in der Regel 77 oder höher, bevorzugt 100 oder höher; insbesondere 115 oder höher. Zudem ist es vorteilhaft, wenn deren Molekulargewicht etwa 2000 oder weniger, bevorzugt etwa 1000 oder weniger, insbesondere etwa 700 oder weniger, beträgt.

Das Molekulargewicht von bevorzugten quartären organischen Ammonium-verbindungen beträgt in der Regel etwa 5000 oder weniger, insbesondere etwa 2000 oder weniger, und ganz besonders bevorzugt etwa 1000 oder weniger.

Die erfindungsgemässe Mischung enthält mindestens ein wasserlösliches organisches Polymer. Dieses ist typischerweise ein synthetisches Polymer und/ oder ein Biopolymer wie Polysaccharide, welches natürlich und/ oder synthetisch hergestellt sein kann. Das wasserlösliche organische Polymer kann gegebenenfalls auch synthetisch modifiziert sein. In der Regel sind die wasserlöslichen organischen Polymere bei Raumtemperatur, sofern nicht gelöst, Festkörper und bevorzugt höhermolekulare Verbindungen. Werden mehrere in Wasser lösliche organische Polymere eingesetzt, kann auch eine Kombination von einer oder mehreren natürlichen Verbindungen mit einer oder mehreren synthetisch hergestellten Verbindungen verwendet werden.

Das erfindungsgemässe wasserlösliche organische Polymer hat oft keinen oder nur einen schwachen ionischen Charakter. Oft ist es jedoch hilfreich, wenn das in Wasser lösliche organische Polymer keine oder nur einen geringen Anteil an Carboxylgruppen aufweist.

Bevorzugt einsetzbare Polysaccharide und deren Derivate sind kaltwasserlösliche Polysaccharide und Polysaccharidether wie beispielsweise Celluloseether, Stärkeether (Amylose und/ oder Amylopectin und/ oder deren Derivate), Guarether und/ oder Dextrine. Es können auch synthetische Polysaccharide wie anionische, nonionische oder kationische Heteropolysaccharide, insbesondere Xanthan Gum oder Wellan Gum verwendet werden. Die Polysaccharide können, müssen aber nicht, chemisch modifiziert sein, beispielsweise mit Carboxymethyl-, Carboxyethyl-, Hydroxyethyl-, Hydroxypropyl-, Methyl-, Ethyl-, Propyl-, Sulfat-, Phosphat- und/ oder langkettigen Alkylgruppen. Weitere natürliche Stabilisierungssysteme sind Alginate, Peptide und/ oder Proteine wie beispielsweise Gelatine, Casein und/ oder Soja-Protein. Ganz besonders bevorzugt sind Dextrine, Stärke, Stärkeether, Casein, Soja-Protein, Gelatine, Hydroxyalkyl-Cellulose und/ oder Alkyl-Hydroxyalkyl-Cellulose.

Synthetische hergestellte in Wasser lösliche organische Polymere können aus einem oder mehreren Schutzkolloiden bestehen, zum Beispiel ein oder mehrere Polyvinylpyrrolidone und/ oder Polyvinylacetale mit Molekulargewichten von 2000 bis 400'000, voll- oder teilverseifte und/ oder mit Aminogruppen, Carbonsäuregruppen und/ oder Alkylgruppen modifizierte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 50 mPas, insbesondere von etwa 3 bis 40 mPas (gemessen bei 20°C nach DIN 53015) sowie Melaminformaldehydsulfonate, Naphthalinformaldehyd-sulfonate, Blockcopolymerisate von Propylenoxid und Ethylenoxid, Styrol-Maleinsäure- und/ oder Vinylether-Maleinsäure-Copolymerisate. Höhermolekulare Oligomere können nicht-ionische, anionische, kationische und/ oder amphotere Emulgatoren sein wie beispielsweise Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen sowie Ester von Sulfobernsteinsäure, quartäre Alkylammonium-Salze, quartäre Alkylphosphonium-Salze, Polyadditionsprodukte wie Polyalkoxylate, beispielsweise Addukte von 5 bis 50 Mol Ethylenoxid und/ oder Propylenoxid pro Mol an lineare und/ oder verzweigte C₆- bis C₂₂-Alkanole, Alkylphenole, höhere Fettsäuren, höhere Fettsäureamine, primäre und/ oder sekundäre höhere Alkyl-Amine, wobei die Alkylgruppe jeweils bevorzugt eine lineare und/ oder verzweigte C₆- bis C₂₂-Alkylgruppe ist. Ganz besonders bevorzugt sind synthetische Stabilisierungssysteme, insbesondere teilverseifte, gegebenenfalls modifizierte, Polyvinylalkohole, wobei ein oder mehrere Polyvinylalkohole zusammen eingesetzt werden können, gegebenenfalls mit geringen Mengen von geeigneten Emulgatoren. Bevorzugte synthetische Stabilisierungssysteme sind insbesondere modifizierte und/ oder unmodifizierte Polyvinylalkohole mit einem Hydrolysegrad von 80 bis 98 Mol-% und einer Höpplerviskosität als 4%ige wässrige Lösung von 1 bis 50 mPas und/ oder Polyvinylpyrrolidon.

Das Gewichtsverhältnis der quartären organischen Ammoniumverbindung zum wasserlöslichen organischen Polymer hängt vor allem von den eingesetzten Materialien und den zu erzielenden Effekten ab. Es kann von etwa 99 : 1 bis etwa 1 : 99, bevorzugt von etwa 90 : 10 bis etwa 10 : 90, insbesondere von etwa 75 : 25 bis etwa 25 : 75, betragen.

Die erfindungsgemässe Mischung ist ein Pulver, ein Granulat, eine wässrige Lösung oder eine wässrige Dispersion.

Als Pulver oder Granulat ist sie in der Regel in Wasser gut redispergierbar oder löslich. Die mittlere Grösse der Pulver oder Granulat Partikel beträgt typischerweise mindestens etwa 10 µm oder mehr, bevorzugt etwa 30 µm oder mehr, insbesondere etwa 50 µm oder mehr, soll jedoch in der Regel höchstens etwa 10 mm oder weniger, bevorzugt etwa 4 mm oder weniger, insbesondere etwa 1 mm oder weniger betragen. Zudem ist es hilfreich, wenn das erfindungsgemässe Pulver oder Granulat gut rieselfähig, block- und lagerstabil ist. Ist die erfindungsgemässe Mischung eine wässrige Lösung oder eine wässrige Dispersion, beträgt der Feststoffgehalt in der Regel etwa 10 bis 75 Gew.-%, insbesondere etwa 25 bis 65 Gew.-%.

Die erfindungsgemässe Mischung kann auch weitere Additive enthalten. Der Gehalt der Additive, bezogen auf die Summe der quartären organischen Ammoniumverbindung und dem wasserlöslichen organischen Polymer, unterliegt keinen wesentlichen Grenzen. So kann er für beispielsweise grenzflächenaktive Substanzen sehr klein sein und im Rahmen von etwa 0.01 Gew.-% oder mehr, insbesondere etwa 0.1 Gew.-% oder mehr und bevorzugt etwa 1 Gew.-% oder mehr, liegen. Auf der anderen Seite können der erfindungsgemässen Mischung auch wesentlich grössere Anteile an Additiven beigemischt werden wie beispielsweise Füllstoffe oder in Wasser redispergierbare Dispersionspulver auf Basis wasserunlöslicher filmbildender Polymere. In solchen Fällen können auf einen Teil der erfindungsgemässen Mischung bis zu etwa 1000 Teile, insbesondere bis zu etwa 500 Teile und bevorzugt bis zu etwa 100 Teile an weiteren Additiven zugegeben werden. Ist die erfindungsgemässe Mischung eine wässrige Lösung oder eine wässrige Dispersion kann es jedoch oft von Vorteil sein, wenn nicht mehr als etwa 100 Teile, insbesondere nicht mehr als etwa 20 Teile und bevorzugt nicht mehr als etwa 5 Teile, bezogen auf einen Teil des Feststoffanteils der erfindungsgemässen Mischung, an weiteren Additiven zugegeben werden.

Der Art der weiteren Additive sind keine Grenzen gesetzt, solange sie keine unerwünschten Reaktionen eingehen. Oft haben sie eine wichtige Funktion bei der Anwendung der erfindungsgemässen Mischung, was aber nicht zwingend ist. Ist die efindungsgemässe Mischung ein Pulver, ist es oft vorteilhaft, wenn das oder die Additive auch pulverförmig sind, wobei aber auch flüssige Additive zugegeben werden können. Dies erfolgt dann bevorzugt vor oder während der Trocknung. So können beispielsweise auch weitere organische Polymere zugegeben werden, die wasserlöslich und/ oder wasserunlöslich sind.

Bevorzugte Additive sind pulverförmige und/ oder flüssige Entschäumer, Netzmittel, Alkyl-, Hydroxyalkyl- und/ oder Alkylhydroxyalkyl-Polysaccharidether wie Celluloseether, Stärkeether und/ oder Guarether, wobei die Alkyl- und Hydroxyalkylgruppe typischerweise eine C₁- bis C₄- Gruppe ist, synthetische Polysaccharide wie anionische, nonionische oder kationische Heteropolysaccharide, insbesondere Xanthan Gum oder Wellan Gum, Cellulosefasern, Dispergiermittel, Rheologiesteuerungsadditive, insbesondere Verflüssiger, Verdicker und/ oder Casein, Hydratationssteuerungsadditive, insbesondere Abbindebeschleuniger, Erstarrungsbeschleuniger und/ oder Abbindeverzögerer, Luftporenbildner, Polycarboxylate, Polycarboxylatether, Polyacrylamide, voll- und/ oder teilverseifte, und gegebenenfalls modifizierte, Polyvinylalkohole, Polyvinylpyrrolidone, Polyalkylenoxide und Polyalkylenglykole, wobei die Alkylengruppe typischerweise eine C₂- und/ oder C₃-Gruppe ist, wozu auch Blockcopolymerisate zählen, Dispersionen und in Wasser redispergierbare Dispersionspulver auf Basis wasserunlöslicher filmbildender Polymere wie beispielsweise auf Basis von Vinylacetat, Ethylen-Vinylacetat, Ethylen-Vinylacetat-Vinylversatat, Ethylen-Vinylacetat-(Meth)Acrylat, Ethylen-Vinylacetat-Vinylchlorid, Vinylacetat-Vinylversatat, Vinylacetat-Vinylversatat-(Meth)acrylat, Vinylversatat-(Meth)acrylat, Rein(Meth)Acrylat, Styrol-Acrylat und/ oder Styrol-Butadien, Hydrophobierungsmittel wie Silane, Silanester, Siloxane, Silicone, Fettsäuren und/ oder Fettsäureester, Verdickungsmittel, Füllstoffe und/ oder Zuschlagstoffe wie quarzitische und/ oder carbonatische Sande und/ oder Mehle wie beispielsweise Quarzsand und/ oder Kalksteinmehl, Carbonate, Silikate, Schichtsilikate, gefällte Kieselsäuren, Leichtfüllstoffe wie Mikrohohlkugeln aus Glas, Polymere wie beispielsweise Polystyrolkugeln, Alumosilikate, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calcium-metasilikat und/ oder vulkanische Schlacke sowie Puzzolane wie Metakaolin und/ oder latenthydraulische Komponenten. Ganz speziell bevorzugte Additive sind Polymerdispersionen, Dispersionspulver, Polysaccharidether, Verflüssiger und Hydrophobierungsmittel, insbesondere Silane, Silanester, Fettsäuren und/ oder Fettsäureester. Es können zudem auch weitere Additive zur Reduktion von Ausblühungen zugegeben werden.

Als Silane, Silanester, Silikone und/ oder Siloxane, können grundsätzlich alle Organosiliciumverbindungen eingesetzt werden. Es ist jedoch von Vorteil, jedoch nicht zwingend, wenn sie in flüssiger oder fester Form vorliegen und der Siedepunkt bei Normaldruck der eingesetzten Organosiliciumverbindung nicht zu niedrig ist, bevorzugt etwa 100 °C oder mehr. Die Organosiliciumverbindungen können in Wasser löslich, unlöslich oder nur teilweise löslich sein. Bevorzugte Organosiliciumverbindungen sind insbesondere Gemische von Alkylalkoxysiloxanen der Summenformel (R")Si(OR"')ₓO_{y} mit 0 < x < 2 und 0,5 < y < 1,5, vorzugsweise 1,0 < x < 2,0 und 0,5 < y ≤ 1,0 mit der Massgabe (2y + x) = 3, und Gruppen R" gleich oder verschieden sind und R" eine lineare, verzweigte oder cyclische Alkylgruppe mit 1 bis 18 C-Atomen darstellt, ferner Gruppen R'" gleich oder verschieden sind und R'" für einen Wasserstoff oder eine lineare oder verzweigte Alkylgruppe mit 1 bis 4 C-Atomen steht, vorzugsweise für H, Methyl, Ethyl, Propyl. Des Weiteren sind bevorzugte Organosiliciumverbindungen Tetraalkoxysilane, Alkyltrialkoxysilane, Dialkyldialkoxysilane, wobei als Alkylgruppen lineare und/ oder verzweigte C₁- bis C₂₀-Alkylgruppen und die Alkoxygruppen als lineare und/ oder verzweigte C₁- bis C₁₀- Alkoxygruppen vorliegen können, wobei als letztere bevorzugt Methoxy-, Ethoxy- und/ oder i-Propoxygruppen verwendet werden. Zudem kann anstelle einer Alkylgruppe auch eine copolymerisierbare Alkylengruppe wie beispielsweise eine vinyl-, allyl- und/ oder (meth)acryl- Gruppe, eingesetzt werden.

Gegenstand der vorliegenden Erfindung sind auch Verfahren zur Herstellung der erfindungsgemässen Mischung. In einem ersten Verfahren a) werden mindestens eine quartäre organische Ammoniumverbindung und mindestens ein wasserlösliches organisches Polymer in Wasser miteinander vermischt und die erhaltene wässrige Mischung wird gegebenenfalls anschliessend getrocknet.

Wird die erhaltene wässrige Mischung getrocknet, erfolgt dies in der Regel mit bekannten Methoden wie Sprühtrocknung, Gefriertrocknung, Fliessbetttrocknung, Walzentrocknung und/ oder Schnelltrocknung, wobei je nach Eigenschaften der Mischung die Sprühtrocknung und/ oder die Walzentrocknung oft bevorzugt sind. Die Versprühung kann beispielsweise mittels Sprührad, Ein- oder Mehrstoff-Düse erfolgen. Falls notwendig, kann die wässrige Mischung noch mit Wasser verdünnt werden, um eine für die Versprühung geeignete Viskosität zu erhalten. Der Trocknungstemperatur sind grundsätzlich keine wesentlichen Grenzen gesetzt. Insbesondere aus sicherheitstechnischen Überlegungen soll sie jedoch in der Regel etwa 200°C, insbesondere etwa 175°C nicht übersteigen. Um eine genügend effiziente Trocknung zu erzielen, sind Temperaturen von etwa 110°C oder höher, insbesondere etwa 120°C oder höher oft bevorzugt.

In einem weiteren Verfahren b) werden mindestens eine pulverförmige quartäre organische Ammoniumverbindung und mindestens ein pulverförmiges wasserlösliches organisches Polymer miteinander vermischt, wobei das Vermischen der Pulver bevorzugt in Pulvermischern erfolgt, woher auch andere Mischverfahren verwendet werden können.

Wiederum in einem anderen Verfahren c) wird mindestens eine flüssige und/ oder gelöste quartäre organische Ammoniumverbindung auf mindestens ein pulverförmiges wasserlösliches organisches Polymer wie beispielsweise pulverförmiger Polyvinylalkohol, Celluloseether und/ oder Stärkeether, aufgebracht. Geeignete Methoden sind dem Fachmann bekannt und beinhalten unter anderem Aufsprühen, Adsorption, Mischen, Fliessbetttrocknung und/ oder Granulation.

Beim erfindungsgemässen Verfahren können auch weitere Additive zugegeben werden, wobei die Zugabe während und/ oder nach den Schritten a), b) und/ oder c) erfolgen kann. Flüssige, gelöste oder dispergierte Additive werden bevorzugt zu Flüssigkeiten und pulverförmige Additive bevorzugt zu Pulvern oder Granulaten gegeben.

Die quartäre organische Ammoniumverbindung kann entweder als Einzelkomponente oder als Mischung zu Baustoffmassen gegeben oder auf Baustoffmassen aufgebracht werden. Als Mischung kann die erfindungsgemässe Mischung oder ein anorganisches Trägermaterial, enthaltend mindestens eine quartäre organische Ammoniumverbindung, eingesetzt werden. Als Trägermaterialien können alle bekannten Trägermaterialien eingesetzt werden, sofern sie für die Adsorption von organischen Verbindungen geeignet sind. Bevorzugte Trägermaterialien beinhalten Antibackmittel, Magnesiumhydrosilicate, feinteiliges Titandioxid, Tonerden, Bleicherden, aktiviertes Aluminiumoxid, Vermiculite wie Bentonit, expandiertes Perlit sowie Phosphate wie Na-Phosphat. Besonders bevorzugt sind Kieselsäuren mit einer BET-Oberflaeche von mindestens 50 m²/g, insbesondere von mindestens 100 m²/g.

Oft ist es von Vorteil, wenn die erfindungsgemässe Mischung pulverförmig ist, insbesondere wenn sie in Trockenmörteln Verwendung findet. Es kann aber auch vorteilhaft sein, wenn die erfindungsgemässe Mischung in flüssigem Zustand vorliegt und so direkt verarbeitet werden kann, was insbesondere bei 2-Komponenten Systemen und industriell verarbeiteten Baustoffmassen wie beispielsweise in Betonen von Bedeutung ist. Zudem können sie als wässrige Lösung, Dispersion, Paste und/ oder Cremes beispielsweise mittels Sprühen und/ oder Rollen nachträglich auf die Oberfläche von Baustoffmasse aufgetragen werden.

Unter Baustoffmassen versteht der Fachmann insbesondere Mörtel, Beton, Putze, Beschichtungssysteme und Baukleber. Die Baustoffmassen enthalten in der Regel ein oder mehrere Bindemittel. Als Bindemittel im Sinne der Erfindung können mineralische und/ oder nicht-mineralische Bindemittel eingesetzt werden. Die Reduktion der Ausblühungen findet in der Regel in applizierten Baustoffmassen statt. Unter applizierter Baustoffmasse wird in der vorliegenden Erfindung verstanden, dass die mit Wasser vermischte Baustoffmasse in seine Endform gebracht wurde und eine minimale Festigkeit erhalten hat. Bei Mörteln und Betonen ist dies typischerweise nach Ablauf der Topfzeit respektive mit dem Beginn des Abbindens nach Vicat der Fall, wobei beides durch einen deutlichen Viskositätsanstieg charakterisiert ist, welcher eine weitere Verarbeitung verhindert.

Nicht-mineralische Bindemittel können als Pulver, als hoch- und/ oder als niederviskose Flüssigkeiten vorliegen. Bevorzugt sind wasserlösliche und/ oder in Wasser dispergierbare Polymere wie filmbildende Dispersionen und/ oder redispergierbare Dispersionspulver auf Basis von Emulsionspolymerisaten sowie Epoxid-Harze.

Mineralische Bindemittel sind in der Regel pulverförmig und bestehen insbesondere aus mindestens a) einem hydraulisch abbindenden Bindemittel, insbesondere Zement, b) einem latent hydraulischen Bindemittel, insbesondere saure Hochofenschlacke, Puzzolane und/ oder Metakaolin, und/ oder c) einem nicht-hydraulischen Bindemittel, welches unter Einfluss von Luft und Wasser reagiert, insbesondere Calciumhydroxid und/ oder Calciumoxid.

Als hydraulisch abbindendes Bindemittel ist Zement, insbesondere Portlandzement, beispielsweise nach EN 196 CEM I, II, III, IV und V, Calciumsulfat in Form von α- und/ oder β-Halbhydrat und/ oder Anhydrit, und/ oder Tonerdeschmelzzement bevorzugt. Als latent hydraulische Bindemittel können Puzzolane wie Metakaolin, Calciummetasilikat und/ oder vulkanische Schlacke, vulkanischer Tuff, Trass, Flugasche, Hochofenschlacke und/ oder Silicastaub eingesetzt werden, welche zusammen mit einer Calciumquelle wie Calciumhydroxid und/ oder Zement, hydraulisch reagieren. Als nichthydraulisches Bindemittel, welches unter Einfluss von Luft und Wasser reagiert, kann insbesondere Kalk, meist in der Form von Calciumhydroxid und/ oder Calciumoxid, eingesetzt werden. Bevorzugt werden vor allem rein Portlandzement-basierte Baustoffmassen oder eine Mischung aus Portlandzement, Tonerdeschmelzzement und Calciumsulfat, wobei bei beiden Systemen gegebenenfalls noch latent hydraulische und/ oder nicht-hydraulische Bindemittel zugesetzt werden können.

Als Zuschlagstoffe, manchmal auch Füllstoffe genannt, sind beispielsweise quarzitische und/ oder carbonatische Sande und/ oder Mehle wie beispielsweise Quarzsand und/ oder Kalksteinmehl, Carbonate, Silikate, Kreide, Schichtsilikate und/ oder gefällte Kieselsäuren. Des Weiteren können Leichtfüllstoffe wie beispielsweise Mikrohohlkugeln aus Glas, Polymere wie Polystyrolkugeln, Alumosilikate, Siliziumoxid, Aluminium-Siliziumoxid, Calcium-Silikathydrat, Aluminium-Silikat, Magnesium-Silikat, Aluminium-Silikathydrat, Calcium-Aluminium-Silikat, Calcium-Silikathydrat Siliziumdioxid und/ oder Aluminium-Eisen-Magnesium-Silikat, aber auch Tone wie Bentonit verwendet werden, wobei die Füllstoffe und/ oder Leichtfüllstoffe auch eine natürliche oder künstlich erzeugte Farbe aufweisen können.

Die erfindungsgemässe Mischung wird bevorzugt in hydraulisch abbindenden Massen, insbesondere in Betonen und Trockenmörteln eingesetzt. Solche Trockenmörtelformulierungen enthalten neben der erfindungsgemässen Mischung insbesondere mindestens ein mineralisches Bindemittel sowie typischerweise weitere zur Formulierung verwendbare Mörtel-Komponenten wie beispielsweise Füllstoffe wie Sand, Silikate und/ oder Carbonate, organische Bindemittel wie Dispersionspulver und/ oder Polyvinylalkohol, Rheologie-Steuerungsadditive wie Polysaccharidether, Casein, Verflüssiger und/ oder Verdicker, Entschäumer und/ oder Additive zur Steuerung der Hydratation wie Beschleuniger und/ oder Verzögerer.

Die erfindungsgemässen Mischungen werden oft als Pulver oder Granulat eingesetzt. So können sie in besonders einfacher und wirtschaftlicher Weise in entsprechende Trockenmörtel, Trockenputze und/ oder Trockenvormischungen für Beton wie beispielsweise Zement, insbesondere modifizierte Zemente, verarbeitet werden. Dies ermöglicht eine besonders gute Dosierung und eine sehr gleichmässige Verteilung der Mischung in der Baustoffmasse und damit auch in den nachfolgend hergestellten Bausteinen, Bauteilen und dem dadurch erhaltenen Bauwerk. Diese Trockenmischungen können dann einfach vor Ort unter Zusatz einer definierten Menge an Wasser vermischt werden und anschliessend verarbeitet werden.

Man kann die erfindungsgemässe Mischung aber auch bei der Zubereitung der Baustoffmasse als gesonderte Komponente beimischen. Bei dieser Ausführungsform ist es oft vorteilhaft, wenn man die Baustoffkomponenten mit der nötigen Menge Wasser mischt bzw. knetet, wobei die Mischung direkt vor, während und/ oder nach der Zugabe von Wasser zugegeben wird. Man kann aber auch die Mischung zuerst dem Anmachwasser zugeben und auf diese Weise zu der trockenen oder bereits feuchten Masse im Mischer dazu geben.

Gegenstand der vorliegenden Erfindung sind auch Trockenmörtelformulierungen, welche mindestens ein Bindemittel und mindestens eine erfindungsgemässe Mischung enthalten, wobei die Trockenmörtelformulierungen beispielsweise als Vollwärmeschutzmörtel, Dichtungsschlämmen, Gips- und/ oder Kalk- und/ oder Zement-Putzen, Reparaturmörtel, Fugenkleber, Fliesenkleber, Plywood-Mörtel, Mörtel für Haftbrücken, Zementgrundierungen, Betonanstrichsmörtel, zementäre Parkettklebstoffe, Nivellier- und/ oder Spachtelmassen formuliert sein können. Die erfindungsgemässen Trockenmörtelformulierungen können im Aussenbereich wie auch im Innenbereich eingesetzt werden. Zudem können die erfindungsgemässen Pulver und Granulate und die nicht getrockneten Mischungen als Betonadditiv und/ oder als Additiv für Betonanstriche eingesetzt werden.

Ein weiterer Gegenstand der Erfindung sind Mörtel oder Beton, welche mindestens ein Bindemittel und mindestens eine erfindungsgemässe Mischung enthalten, wobei als Beton insbesondere Stahlbeton, Porenbeton, Gasbeton, Schaumbeton, Fertigbauteile aus Beton, Mörtel, Putze, Fugenmassen, Bauteile aus Kalksandstein, Klinker, Ziegel, poröse Fliesen und Kacheln, Terrakotta, Natursteine, Faserzemente, Estriche, Tonartikel, Mauerwerke, Fassaden, Dächer sowie Bauwerke wie Brücken, Hafenanlagen, Wohngebäude, Industriegebäude und öffentlich genutzte Gebäude wie Parkhäuser, Bahnhöfe oder Schulen, aber auch Fertigteile wie Bahnschwellen oder L-Steine, geeignet sind.

Die erfindungsgemässen Trockenmörtelformulierungen, Mörtel und/ oder Betone enthalten neben der erfindungsgemässen Mischung vorteilhafterweise einen Anteil an Bindemittel von etwa 0,5 bis etwa 50 Gew.-%, insbesondere von etwa 1,0 bis etwa 30 Gew.-%, an Zuschlagstoffen etwa 30 bis 99 Gew.-%, insbesondere etwa 50 bis 98 Gew.-%, an in Wasser redispergierbaren filmbildenden Polymerpulvern, oft auch Dispersionspulver genannt, etwa 0 bis 30 Gew.-%, insbesondere bis etwa 20 Gew.-%, an Polysaccharidether etwa 0 bis 2,0 Gew.-%, insbesondere bis etwa 1,0 Gew.-%, und derjenige an weiteren Komponenten wie beispielsweise Calciumhydroxid und/ oder Calciumoxid beträgt etwa 0 bis 25 Gew.-%, wobei letzteres, wenn es eingesetzt wird, bevorzugt in Mengen bis etwa 10 Gew.-% insbesondere etwa bis 5 Gew.-% eingesetzt wird, wobei sich die Mengenanagaben jeweils auf den Trockenanteil der jeweiligen Formulierung bezieht.

Die Einsatzmenge der quartären organischen Ammoniumverbindung oder der quartären organischen Ammoniumverbindung enthaltende Mischung wird in der Regel so gewählt, dass die Reduktion der Ausblühungen optimal ist. Dies heisst, dass von blossem Auge keine Ausblühungen mehr beobachtet werden können. Da sich die Baustoffmassen jedoch beispielsweise hinsichtlich Zusammensetzung, applizierter Schichtdicke und/ oder klimatischem Umfeld stark voneinander unterscheiden können, ist es vorteilhaft, wenn die Einsatzmenge auf die jeweilige Baustoffmasse abgestimmt wird. Überraschenderweise wurde gefunden, dass für die erfindungsgemässe Verwendung der quartären Ammoniumverbindung und der erfindungsgemässen Mischung schon geringste Mengen reichen, um das Ausblühverhalten der Materialien deutlich zu senken oder ganz zu unterbinden. Bevorzugt werden Mengen eingesetzt von mindestens etwa 0.0001 Gew.-%, insbesondere mindestens etwa 0.001 Gew.-%, ganz besonders bevorzugt mindestens etwa 0.005 Gew.-% und/ oder höchstens etwa 5 Gew.-%, insbesondere höchstens etwa 2 Gew.-%, ganz besonders bevorzugt höchstens etwa 1 Gew.-%, bezogen auf die Trockensubstanz der Baustoffmasse, der Trockenmörtelformulierung, des Mörtels und/ oder des Betons.

Die in der erfindungsgemässen Verwendung einsetzbaren quartären organischen Ammoniumverbindungen und die erfindungsgemässe Mischung lassen sich mit Baustoffmassen, insbesondere mit Baustoffmassen enthaltend mineralisch abbindende Komponenten, die mit Wasser angerührt werden, sehr gut vermischen. Liegt die quartäre organische Ammoniumverbindung und/ oder die erfindungsgemässe Mischung in Form eines Pulvers oder Granulats vor, weisen sie typischerweise eine sehr gute Benetzbarkeit auf. Zudem sind die Löslichkeit respektive die Redispergierbarkeit sehr vorteilhaft, sodass schon bei Kontakt mit Wasser innerhalb von wenigen Sekunden, allenfalls durch leichtes Umrühren die Mischung vollständig gelöst oder redispergiert ist. Zudem sind oft nur geringste Mengen an quartären organischen Ammoniumverbindungen notwendig, was in der Regel von grossem Vorteil ist.

Die Erfindung wird anhand der nachfolgenden Beispiele erläutert.

### Herstellung von Pulvern

### Beispiel 1: Herstellung von Pulver 1

Es wurden 87.5g eines handelsüblichen Calcium/Magnesium Carbonates (Dolomit DR80C) mit 12.5g Benzalkoniumchlorid (Merck) in einem Mörser intensive vermischt. Es resultierte eine homogene pulverförmige Mischung, welche gut dosierbar ist.

### Beispiel 2: Herstellung von Pulver 2

Zu 292 g einer 24%igen Polyvinylalkohollösung mit einem Verseifungsgrad von 88 Mol-% und einer Höpplerviskosität als 4%-ige Lösung von 4 mPas wurden in einem 500 ml Glasgefäss mit einem Propellerrührer unter Rühren bei 1000 Upm bei Raumtemperatur 30 g Benzalkoniumchlorid (Merck) zugegeben, wobei sich das Benzalkoniumchlorid vollständig löste. Die erhaltene Lösung wurde mit Wasser bis zu einer Brookfieldviskosität (bei 23°C und 20 Upm) von zwischen 500 und 1000 mPas verdünnt und anschliessend ohne weitere Additive mittels konventioneller Sprühtrocknung bei einer Eingangstemperatur von 120°C zu einem leicht gelblichen in Wasser gut löslichen Pulver getrocknet, wobei keine nennenswerte Verschmutzung im Sprühturm festzustellen war und die Ausbeute im normalen Bereich lag.

### Beispiel 3: Herstellung von Pulver 3

Es wurden 90 g eines handelsüblichen Calcium/Magnesium Carbonates (Dolomit DR80C) mit 10 g Pulver 2 (aus Beispiel 2) vermischt.

### B) Anwendungstechnische Prüfungen mit zementären Massen.

### Beispiel 4:

Es wurden 35.0 Teile weisser Portlandzement, 19.2 Teile Quarzsand (0.08-0.2mm), 41.0 Teile Calciumcarbonat Durcal 65, 0.3 Teile eines Celluloseethers (Viskosität als 2% wässrige Lösung: 3200 mPas), 2.0 Teile Pigment Bayferrox 110 und 1.0 Teile Baukalk gut gemischt und als Trockenmörtelgrundrezepturen verwendet. Zu dieser wurden verschiedene Pulver in unterschiedlichen Mengen eingesetzt wie aus Tabelle 1 hervorgeht, welche ohne weitere spezielle Mischvorgänge einfach in die Mörtelmatrix eingerührt werden konnten. Die Rezepturen wurden jeweils mit 32 Teilen Wasser, bezogen auf 100 Teile Trockenformulierung, mit einem 60mm Propellerrührer mit einer Geschwindigkeit von 950 Upm während 60 Sekunden angerührt, wobei die angegebene Menge Anmachwasser unter Rühren zugegeben wurde. Nach einer Reifezeit von 3 Minuten wurde der Mörtel von Hand nochmals kurz aufgerührt, und mit einem Spachtel auf eine unglasierte Steingutfliese mit einer Dicke von 6 mm auf einer Grösse von (196mm x 50mm) appliziert, wobei Fliesen unmittelbar vorher mit Wasser gesättigt wurden. Es wurden jeweils zwei verschiedene Proben hergestellt, wobei der Mörtel mittels Distanzschienen in einer Schichtdicke von 2.0 mm appliziert wurde.

Die Prüflinge wurden anschliessend sofort in einen auf 7°C gekühlten Klimaraum an einen Behälter mit Wasser montiert, welches konstant auf 20°C erwärmt wurde. Der Behälter wurde so konstruiert, dass Prüflinge mindestens 5 cm über der Wasseroberfläche zu liegen kommen und eine Neigung von einem 45° Winkel besitzen. Die von den Prüflingen nicht bedeckte Fläche wurde abgedeckt und isoliert, so dass Wasserdampf durch das Trägermaterial in und durch die Prüflinge dringt. Nach einer Lagerdauer von 7 Tagen wurde die Oberfläche auf Ausblühungen hin optisch (Auge und Mikroskop) beurteilt.

**Tabelle 1: Anwendungstechnische Beispiele anhand einer eingefärbten zementären Spachtelmasse mit einer Schichtdicke von 2.0 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur [Gew.-Teile] | Pulver Nr. | Pulveranteil [Gew.-Teile] | QAV-Gehalt ^{a)} [Gew.-%] | Ausblühungen |
|---|---|---|---|---|---|
| 1-a | 98.5 | N/A | 0 | 0 | sehr stark |
| 1-b | 98.5 | 1 | 0.4 | 0.05 | keine |
| 1-c | 98.5 | 1 | 0.2 | 0.025 | keine |
| 1-d | 98.5 ^{b)} | 1 | 0.2 | 0.025 | keine |
| 1-e | 100 | c) | 0.1 | 0.1 | keine |
| 1-f | 100 | d) | d) | 0.1 | keine |

| | | | | | |
|---|---|---|---|---|---|
| a) QAV steht für Quartäre Ammonium-Verbindung. b) Zu den 98.5 Gew.-Teilen Grundrezeptur wurden noch zusätzlich 3 Gew.-Teile eines handelsüblichen Ethylen-Vinylacetat Dispersionspulvers zugegeben. c) Als Pulver wurde Centrolex FSB (Rein-Lecithin von Central Soya European Lecithins GmbH & Co KG; Hamburg) eingesetzt. d) Anstelle eines Pulvers wurde eine wässrige Lösung von Cetyltrimethylammoniumchlorid (Dehyquart A CA von Cognis) eingesetzt. | | | | | |

Die Resultate zeigen deutlich, dass die Proben, auch wenn sie sehr geringe Mengen an quartärer Ammoniumverbindung enthalten, die Ausblühungen so stark unterdrücken oder sogar ganz unterbinden, dass selbst unter dem Mikroskop keine beobachtet wurden. Die Referenzprobe hingegen zeigt sehr starke Ausblühungen.

### Beispiel 5:

Es wurden 28.0 Teile weisser Portlandzement, 25.0 Teile Quarzsand 0.1-0.3mm, 8.0 Teile Sand 0.7-1.2mm, 35.0 Teile Sand 1.5-2.2mm, 0.05 Teile eines Celluloseethers (Viskosität als 2% wässrige Lösung: 15'000 mPas) und 2.0 Teile Pigment Bayferrox 110 gut gemischt und als Trockenmörtelgrundrezeptur verwendet. Die Rezepturen wurden jeweils mit 17 Teilen Wasser, bezogen auf 100 Teile Trockenformulierung, angerührt und analog Beispiel 4 getestet.

**Tabelle 2: Anwendungstechnische Beispiele anhand eines dekorativen Farbputzes mit einer Schichtdicke von 2.2 mm zur Beurteilung von Ausblühungen. Die Mörtelverarbeitbarkeit war bei allen Proben gut und die Mörtelkonsistenz jeweils vergleichbar mit der Referenz.**

| Versuch Nr. | Grundrezeptur [Gew.-Teile] | Pulver Nr. | Pulveranteil [Gew.-Teile] | QAV-Gehalt ^{a)} [Gew.-%] | Ausblühungen |
|---|---|---|---|---|---|
| 2-a | 100 | N/A | 0 | 0 | Sehr stark |
| 2-b | 100 | 1 | 0.4 | 0.05 | keine |
| 2-c | 100 | 2 | 0.16 | 0.05 | keine |
| 2-d | 100 | 2 | 0.05 | 0.006 | keine |
| 2-e | 100 | 3 | 1.6 | 0.05 | keine |
| 2-f | 100 | 3 | 0.8 | 0.025 | keine |
| 2-g | 100 | 3 | 0.4 | 0.012 | keine |
| 2-h | 100 | 2 | 0.32 | 0.1 | keine |

| | | | | | |
|---|---|---|---|---|---|
| a) siehe Tabelle 1 | | | | | |

Die aufgeführten Resultate demonstrieren, dass selbst sehr geringe Mengen (beispielsweise nur 0.006 Gew.-%, bezogen auf die Trockensubstanz) an quartärer Ammoniumverbindung eine sehr starke Reduktion der Ausblühungen auch in einem dekorativen Farbputz bewirken, sodass von blossem Auge keine Verfärbungen erkennbar sind. Zudem ändern sich die anderen Mörteleigenschaften nicht oder nur sehr unwesentlich - sei es im Frischmörtel oder im abgebundenen Zustand.

## Patentansprüche

1. Verwendung von quartären organischen Ammoniumverbindungen in Baustoffmassen zur Reduktion von Ausblühungen bei Baustoffmassen.

2. Verwendung nach Anspruch 1, **dadurch gekennzeichnet, dass** die quartäre organische Ammoniumverbindung als Mischung zur Baustoffmasse gegeben wird, wobei die Mischung mindestens eine quartäre organische Ammoniumverbindung und mindestens ein wasserlösliches organisches Polymer sowie gegebenenfalls weitere Additive enthält, oder ein anorganisches Trägermaterial, enthaltend mindestens eine quartäre organische Ammoniumverbindung, ist.

3. Verwendung nach Anspruch 2, **dadurch gekennzeichnet, dass** die Mischung ein Pulver, ein Granulat, eine wässrige Lösung, Dispersion, Paste und/ oder Crème ist.

4. Verwendung nach Anspruch 2 oder 3, **dadurch gekennzeichnet, dass** das wasserlösliche organischen Polymer ein synthetisches Polymer darstellt, insbesondere in Form von modifizierten und/ oder unmodifizierten Polyvinylalkohol, Polyvinylpyrrolidon, Polycarboxylatether, und/ oder Formaldehydkondensaten, insbesondere Melaminformaldehydkondensaten und Naphthalinformaldehydkondensaten sowie deren sulfonierten Derivaten.

5. Verwendung nach mindestens einem der Ansprüche 2 bis 4, **dadurch gekennzeichnet, dass** das wasserlösliche organische Polymer ein natürliches und/ oder synthetisch hergestelltes Biopolymer darstellt, das gegebenenfalls synthetisch modifiziert ist, und insbesondere Stärke, Stärkeether, Dextrine, Celluloseether, Casein, und/ oder Soja-Protein ist.

6. Verwendung nach mindestens einem der Ansprüche 1 bis 5, **dadurch gekennzeichnet, dass** mindestens eine quartäre organische Ammoniumverbindung die Formel (1), (2) und/ oder (3)
(N⁺R₁R₂R₃R₄)A⁻ (1)
(N⁺R₁R₂R₃R₄) ₂A²⁻ (2)
(N⁺R₁R₂R₃R₄)₃A³⁻ (3)
besitzt, wobei R₁, R₂, R₃ und R₄ organische Gruppen mit mindestens einem C-Atom darstellen und gleich oder unterschiedlich sind, und A⁻ ein einwertiges, A²⁻ ein zweiwertiges und A³⁻ ein dreiwertiges Anion bedeutet.

7. Verwendung nach Anspruch 6, **dadurch gekennzeichnet, dass** mindestens eine der organischen Gruppen R₁, R₂, R₃ und/ oder R₄ mindestens eine gesättigte und/ oder ungesättigte C₆- bis C₅₀- Alkyl- und/ oder Heteroalkylgruppe ist, die linear, verzweigt, cyclisch und/ oder aromatisch ist.

8. Verwendung nach Anspruch 6 oder 7, **dadurch gekennzeichnet, dass** mindestens eine der organischen Gruppen R₁, R₂, R₃ und/ oder R₄ eine gesättigte und/ oder ungesättigte C₁- bis C₄- Alkylgruppe, insbesondere eine Methyl-, Ethyl-, Propyl-, Butylgruppe ist.

9. Verfahren zur Herstellung einer Mischung zur Verwendung nach mindestens einem der Ansprüche 2 bis 8, **dadurch gekennzeichnet, dass**
a) mindestens eine quartäre organische Ammoniumverbindung und mindestens ein wasserlösliches organisches Polymer in Wasser miteinander vermischt werden und gegebenenfalls die erhaltene wässrige Mischung anschliessend getrocknet wird, oder
b) mindestens eine pulverförmige quartäre organische Ammonium-verbindung und mindestens ein pulverförmiges wasserlösliches organisches Polymer miteinander vermischt werden, oder
c) mindestens eine flüssige und/ oder gelöste quartäre organische Ammoniumverbindung auf mindestens ein pulverförmiges wasserlösliches organisches Polymer aufgebracht wird, insbesondere mittels Aufsprühen, Adsorption, Mischen, Fliessbetttrodcnung und/ oder Granulation.

10. Verfahren nach Anspruch 9, **dadurch gekennzeichnet, dass** vor, während und/ oder nach den Schritten a), b) und/ oder c) weitere Additive zugegeben werden, wobei flüssige, gelöste oder dispergierte Additive bevorzugt zu Flüssigkeiten und pulverförmige Additive bevorzugt zu Pulvern oder Granulaten gegeben werden.

11. Mischung erhältlich nach mindestens einem Verfahren gemäss Anspruch 9 oder 10.

12. Trockenmörtelformulierung enthaltend mindestens ein Bindemittel und mindestens eine Mischung nach Anspruch 11.

13. Mörtel oder Beton enthaltend mindestens ein Bindemittel und mindestens eine Mischung nach Anspruch 11.

14. Trockenmörtelformulierung nach Anspruch 12 und Mörtel oder Beton nach Anspruch 13, **dadurch gekennzeichnet, dass** der Gehalt an quartärer organischer Ammoniumverbindung mindestens etwa 0.0001 Gew.-%, und/ oder höchstens etwa 5 Gew.-%, bezogen auf die Trockensubstanz, der Trockenmörtelformulierung, des Mörtels und/ oder des Betons, beträgt.

## Claims

1. Use of quarternary organic ammonium compounds in building materials for the reduction of efflorescence in building materials.

2. Use according to claim 1, **characterised in that** the quarternary organic ammonium compound is added to the building material as a mixture, with the mixture containing at least one quarternary organic ammonium compound and at least one water-soluble organic polymer and optionally further additives, or being an inorganic carrier material containing at least one quarternary organic ammonium compound.

3. Use according to claim 2, **characterised in that** the mixture is a powder, a granulate, an aqueous solution, dispersion, paste and/or cream.

4. Use according to claim 2 or 3, **characterised in that** the water-soluble organic polymer is a synthetic polymer, in particular in the form of modified and/or unmodified polyvinyl alcohol, polyvinyl pyrrolidone, polycarboxylate ether, and/or formaldehyde condensates, in particular melamine formaldehyde condensates and naphthaline formaldehyde condensates and sulphonated derivatives thereof.

5. Use according to at least one of claims 2 to 4, **characterised in that** the water-soluble organic polymer is a natural and/or synthetically prepared biopolymer, which optionally is synthetically modified, and in particular is starch, starch ether, dextrins, cellulose ether, casein, and/or soy protein.

6. Use according to at least one of claims 1 to 5, **characterised in that** at least one quaternary organic ammonium compound has the formula (1), (2) and/or (3)
(N⁺R₁R₂R₃R₄)A⁻ (1)
(N⁺R₁R₂R₃R₄)₂A²⁻ (2)
(N⁺R₁R₂R₃R₄)₃A³⁻ (3)
wherein R₁, R₂, R₃, and R₄ represent organic groups with at least one C-atom and are the same or different, and A⁻ stands for a monovalent, A²⁻ stands for a divalent, and A³⁻ stands for a trivalent anion.

7. Use according to claim 6, **characterised in that** at least one of the organic groups R₁, R₂, R₃ and/or R₄ is at least one saturated and/or unsaturated C₆- to C₅₀-alkyl and/or heteroalkyl group, which is linear, branched, cyclic and/or aromatic.

8. Use according to claim 6 or 7, **characterised in that** at least one of the organic groups R₁, R₂, R₃ and/or R₄ is a saturated and/or unsaturated C₁-to C₄-alkyl group, in particular a methyl, ethyl, propyl, butyl group.

9. Process for the preparation of a mixture for use according to at least one of claims 2 to 8, **characterised in that**
a) at least one quaternary organic ammonium compound and at least one water-soluble organic polymer are mixed with one another in water and optionally the obtained aqueous mixture is subsequently dried, or
b) at least one powdery quaternary organic ammonium compound and at least one powdery water-soluble organic polymer are mixed with one another, or
c) at least one liquid and/or dissolved quaternary organic ammonium compound is applied to at least one powdery water-soluble organic polymer, in particular by means of spraying, adsorption, mixing, fluidised bed drying and/or granulation.

10. Process according to claim 9, **characterised in that** before, during and/or after steps a), b) and/or c) further additives are added, with liquid, dissolved or dispersed additives preferably being added to liquids and powdery additives preferably being added to powders or granulates.

11. Mixture obtainable according to at least one process according to claim 9 or 10.

12. Dry mortar formulation containing at least one binder and at least one mixture according to claim 11.

13. Mortar or concrete containing at least one binder and at least one mixture according to claim 11.

14. Dry mortar formulation according to claim 12 and mortar or concrete according to claim 13, **characterised in that** the content of quarternary organic ammonium compound is at least about 0,0001 wt.%, and/or at most about 5 wt.%, based on dry substance, of the building material, the dry mortar formulation, the mortar and/or the concrete.

## Revendications

1. Utilisation de composés d'ammonium quaternaires organiques dans des masses de matériaux de construction pour la réduction d'efflorescences dans les masses de matériaux de construction.

2. Utilisation selon la revendication 1, **caractérisée en ce que** le composé d'ammonium quaternaire organique est ajouté en mélange à la masse de matériau de construction, le mélange contenant au moins un composé d'ammonium quaternaire organique et au moins un polymère organique hydrosoluble et éventuellement d'autres additifs, ou étant un matériau de support anorganique contenant au moins un composé d'ammonium quaternaire organique.

3. Utilisation selon la revendication 2, **caractérisée en ce que** le mélange est une poudre, un granulé, une solution aqueuse, une dispersion, une pâte et/ou une crème.

4. Utilisation selon la revendication 2 ou 3, **caractérisée en ce que** le polymère organique hydrosoluble est un polymère synthétique, en particulier sous la forme d'alcool polyvinylique modifié et/ou non modifié, de polyvinylpyrrolidone, d'éther de polycarboxylate et/ou de condensés de formol, en particulier de condensés de mélamine-formaldéhyde et de condensés de naphtaline-formaldéhyde et leurs dérivés sulfonés.

5. Utilisation selon au moins l'une des revendications 2 à 4, **caractérisée en ce que** le polymère organique hydrosoluble est un biopolymère naturel et/ou produit par synthèse qui est éventuellement modifié par synthèse et en particulier, est un amidon, un éther d'amidon, une dextrine, un éther de cellulose, une caséine et/ou une protéine de soja.

6. Utilisation selon au moins l'une des revendications 1 à 5, **caractérisée en ce qu'**au moins un composé d'ammonium quaternaire organique est de formule (1), (2) et/ou (3)
(N⁺R₁R₂R₃R₄)A⁻ (1)
(N⁺R₁R₂R₃R₄)₂A²⁻ (2)
(N⁺R₁R₂R₃R₄)₃A³⁻ (3)
dans laquelle R₁, R₂, R₃ et R₄ désignent des groupes organiques comportant au moins un atome de carbone et sont identiques ou différents et A⁻ désigne un anion monovalent, A²⁻, un anion bivalent et A³⁻, un anion trivalent.

7. Utilisation selon la revendication 6, **caractérisée en ce qu'**au moins l'un des groupes organiques R₁, R₂, R₃ et/ou R₄ est au moins un groupe alkyle et/ou hétéroarylke en C₆ à C₅₀, saturé ou insaturé, qui est linéaire, ramifié, cyclique et/ou aromatique.

8. Utilisation selon la revendication 6 ou 7, **caractérisée en ce qu'**au moins l'un des groupes organiques R₁, R₂, R₃ et/ou R₄ est un groupe alkyle en C₁ à C₄ saturé et/ou insaturé, en particulier, un groupe méthyle, éthyle, propyle, butyle.

9. Procédé de production d'un mélange pour l'utilisation selon au moins l'une des revendications 2 à 8, **caractérisé en ce que**
a) au moins un composé d'ammonium quaternaire organique et au moins un polymère organique hydrosoluble sont mélangés conjointement dans de l'eau et éventuellement, le mélange aqueux obtenu est ensuite séché, ou
b) au moins un composé d'ammonium quaternaire organique pulvérulent et au moins un polymère organique hydrosoluble pulvérulent sont mélangés conjointement, ou
c) au moins un composé d'ammonium quaternaire organique fluide et/ou dissous est appliqué sur au moins un polymère organique hydrosoluble pulvérulent, en particulier par pulvérisation, adsorption, mélange, séchage en lit fluidisé et/ou granulation.

10. Procédé selon la revendication 9, **caractérisé en ce que**, avant, pendant et/ou après les étapes a), b) et/ou c), on ajoute d'autres additifs, les additifs fluides, dissous ou dispersés étant préférés aux liquides et les additifs pulvérulents étant préférés aux poudres ou aux granulés.

11. Mélange pouvant être obtenu selon au moins un procédé selon la revendication 9 ou 10.

12. Formulation de mortier sèche contenant au moins un liant et au moins un mélange selon la revendication 11.

13. Mortier ou béton contenant au moins un liant et au moins un mélange selon la revendication 11.

14. Formulation de mortier sèche selon la revendication 12 et mortier ou béton selon la revendication 13, caractérisé(e) en ce que la teneur en composé d'ammonium quaternaire organique est d'au moins environ 0,0001 % en poids et/ou d'au plus environ 5 % en poids par rapport à la substance sèche, la formulation de mortier sèche, le mortier et/ou le béton.
